# EUROPEAN PATENT APPLICATION

(11) **EP 4 610 418 A1**
(43) Date of publication of application: **03.09.2025**
(21) Application number: 23881781.1
(22) Date of filing: 23.10.2023
(51) Int. Cl.: D06F 33/40, D06F 34/16

(54) **METHOD FOR INCREASING SPIN-DRYING ACHIEVEMENT RATE OF WASHING MACHINE, STORAGE MEDIUM AND ELECTRONIC DEVICE**

(30) Priority: 25.10.2022 CN 202211326947
(71) Applicant: Qingdao Haier Washing Machine Co., Ltd., Qingdao, Shandong 266101 (CN); Haier Smart Home Co., Ltd, Qingdao, Shandong 266101 (CN)
(72) Inventor: XIA, Hao, Qingdao, Shandong 266101 (CN); LI, Tao, Qingdao, Shandong 266101 (CN); LI, Shikun, Qingdao, Shandong 266101 (CN); ZHANG, Shuguo, Qingdao, Shandong 266101 (CN); LI, Jiaxin, Qingdao, Shandong 266101 (CN)
(74) Representative: Patentwerk B.V.
(86) International application number: PCT/CN2023/125890
(87) International publication number: WO 2024/088203

(57) **Abstract**

This application discloses a method for increasing a spin-drying achievement rate of a washing machine, a storage medium and an electronic device, which relates to the technical field of household appliances. The method for increasing a spin-drying achievement rate of a washing machine includes: in response to a spin-drying instruction, controlling a drum to operate at a first rotation speed to perform load distribution until an acquired static eccentricity value is less than a preset static eccentricity value; determining whether an acquired dynamic eccentricity increment is less than or equal to a preset dynamic eccentricity increment; if the dynamic eccentricity increment is greater than the preset dynamic eccentricity increment, controlling the drum to operate at a second rotation speed until the acquired dynamic eccentricity increment is no longer greater than the preset dynamic eccentricity increment; and controlling the drum to operate at a third rotation speed to perform spin-drying. By means of the above solution, the problem of low spin-drying achievement rate or excessively long program time caused by frequent load distribution in the prior art when a drum washing machine executes a spin-drying instruction is solved.

## Description

### CROSS-REFERENCE TO RELATED APPLICATIONS

This application claims priority to Chinese Patent Application No. CN202211326947.2, filed on October 25, 2022 and entitled "METHOD FOR INCREASING SPIN-DRYING ACHIEVEMENT RATE OF WASHING MACHINE, STORAGE MEDIUM, AND ELECTRONIC DEVICE", which is incorporated herein by reference in its entirety.

### TECHNICAL FIELD

This application relates to the technical field of household appliances, and specifically, to a method for increasing a spin-drying achievement rate of a washing machine, a storage medium and an electronic device.

### BACKGROUND

With increasing improvement in living standards of people, washing machines have gradually become one of necessary home appliances for people and greatly facilitate daily life of people. Spin-drying, as one of commonly used functions of a washing machine, can greatly reduce water in washed clothes, so that the clothes can be dried quickly.

Whether an existing drum washing machine can perform high-speed spin-drying is determined basically based on two manners: static eccentricity and dynamic eccentricity. However, to ensure that the drum washing machine does not shift, and an inner drum is not hit, a dynamic eccentricity increment of the drum washing machine is usually set to a conservative value, usually causing the problem of low spin-drying achievement rate or excessively long program time caused by frequent load distribution.

### SUMMARY

The present invention provides a method for increasing a spin-drying achievement rate of a washing machine, a storage medium and an electronic device, to solve the problem of low spin-drying achievement rate or excessively long program time caused by frequent load distribution in the prior art when a drum washing machine executes a spin-drying instruction.

According to a first aspect, the present invention provides a method for increasing a spin-drying achievement rate of a washing machine, including the following steps:
S10: in response to a spin-drying instruction, controlling a drum to operate at a first rotation speed for to perform load distribution until an acquired static eccentricity value is less than a preset static eccentricity value;
S20: determining whether an acquired dynamic eccentricity increment is less than or equal to a preset dynamic eccentricity increment;
S30: if the dynamic eccentricity increment is greater than the preset dynamic eccentricity increment, controlling the drum to operate at a second rotation speed until the acquired dynamic eccentricity increment is no longer greater than the preset dynamic eccentricity increment; and
S40: controlling the drum to operate at a third rotation speed to perform spin-drying.

The first rotation speed < the second rotation speed < the third rotation speed.

Further, the method for increasing a spin-drying achievement rate of a washing machine further includes:
S32: acquiring a dynamic eccentricity increment after the drum is controlled to operate at the second rotation speed for a preset duration; and
S34: performing different spin-drying strategies according to a result of comparison between a quantity of times that the acquired dynamic eccentricity increment is greater than the preset dynamic eccentricity increment with a preset quantity of times.

Further, the performing different spin-drying strategies according to a result of comparison between a quantity of times that the acquired dynamic eccentricity increment is greater than the preset dynamic eccentricity increment with a preset quantity of times includes:
if the quantity of times that the acquired dynamic eccentricity increment is greater than the preset dynamic eccentricity increment is less than the preset quantity of times, jumping to step S10.

If the quantity of times that the acquired dynamic eccentricity increment is greater than the preset dynamic eccentricity increment is not less than the preset quantity of times, spin-drying is not performed.

Further, the method for increasing a spin-drying achievement rate of a washing machine further includes: if the dynamic eccentricity increment is not greater than the preset dynamic eccentricity increment, jumping to step S40.

Further, the first rotation speed ranges from 60 r/min to 110 r/min.

Further, the second rotation speed ranges from 150 r/min to 250 r/min.

According to a second aspect, the present invention provides a device for increasing a spin-drying achievement rate of a washing machine, including: a drive module, an acquisition module, and a determination module.

The drive module is configured to: in response to a spin-drying instruction, control a drum to operate at a first rotation speed to perform load distribution until a static eccentricity value acquired by the acquisition module is less than a preset static eccentricity value.

The determination module is configured to: determine whether an acquired dynamic eccentricity increment is less than or equal to a preset dynamic eccentricity increment.

The drive module is configured to: if the determination module determines that the dynamic eccentricity increment is greater than the preset dynamic eccentricity increment, control the drum to operate at a second rotation speed until the dynamic eccentricity increment acquired by the acquisition module is no longer greater than the preset dynamic eccentricity increment.

The drive module is configured to: if the dynamic eccentricity increment acquired by the acquisition module is no longer greater than the preset dynamic eccentricity increment, control the drum to operate at a third rotation speed to perform spin-drying.

According to a third aspect, the present invention provides a computer-readable storage medium, including a program, where when the program is run, the method for increasing a spin-drying achievement rate of a washing machine is performed.

According to a fourth aspect, the present invention provides an electronic device, including a memory and a processor, where the memory stores a computer program, and the processor is configured to perform, through the computer program, the method for increasing a spin-drying achievement rate of a washing machine.

A working principle and beneficial effects of the present invention are as follows:

According to the present invention, on the premise of setting the preset dynamic eccentricity increment to a conservative value, first, it is first ensured that when the drum washing machine performs high-speed spin-drying, the drum washing machine does not shift, and an inner drum is not hit. Second, when the dynamic eccentricity increment is greater than the preset dynamic eccentricity increment, the drum is controlled to operate at the second rotation speed, and a quantity of times of vibration of a shock absorber is increased in a short period of time, so that the shock absorber quickly produces heat through friction. In this way, based on a characteristic that a force of the shock absorber varies with a temperature, the temperature of the shock absorber is increased in a short period of time, so that the force of the shock absorber tends to be stable, and a dynamic eccentricity value of the drum tends to be a stable value quickly, thereby reducing the dynamic eccentricity increment. It is ensured that a condition of high-speed spin-drying can be met quickly and better after the spin-drying instruction is received, improving the spin-drying achievement rate and avoiding the problem of excessively long program time caused by frequent load distribution.

### BRIEF DESCRIPTION OF DRAWINGS

The accompanying drawings herein are incorporated into this specification and constitute a part of this specification, show embodiments conforming to this application, and are used together with this specification to explain a principle of this application.

To describe technical solutions in embodiments of this application or in the prior art more clearly, the accompanying drawings to be used in the description of the embodiments or the prior art will be briefly described. It is clear that a person of ordinary skill in the art may still derive other drawings based on these accompanying drawings without creative efforts.
FIG. 1 is a flowchart of Embodiment 1 of the present invention;
FIG. 2 is a curve chart showing a variation of a force of a shock absorber with a temperature according to Embodiment 1 of the present invention;
FIG. 3 is a schematic block diagram of Embodiment 2 of the present invention; and
FIG. 4 is a schematic diagram of an electronic device according to Embodiment 4 of the present invention.

### DETAILED DESCRIPTION OF THE EMBODIMENTS

To make a person skilled in the art understand the solutions in this application better, the technical solutions in embodiments of this application will be clearly and completely described below in conjunction with the accompanying drawings in the embodiments of this application. It is clear that the described embodiments are merely some but not all of embodiments of this application. All other embodiments obtained by a person of ordinary skill in the art based on the embodiments of this application without creative efforts shall fall within the protection scope of this application.

It should be noted that the terms "first," "second", and the like in the specification, claims, and the accompanying drawings of this application are intended to distinguish similar objects but are not necessarily intended to indicate a specific order or sequence. It should be understood that data used in such a way is interchangeable in appropriate circumstances, so that embodiments of this application described herein can be implemented in an order other than the order illustrated or described herein. In addition, the terms "include," "contain," and any variant thereof are intended to cover a non-exclusive inclusion. For example, a process, method, system, article, or device that includes a series of steps or units is not necessarily limited to those steps or units that are expressly listed, but may include other steps or units that are not expressly listed or inherent to the process, method, article, or device.

### Embodiment 1

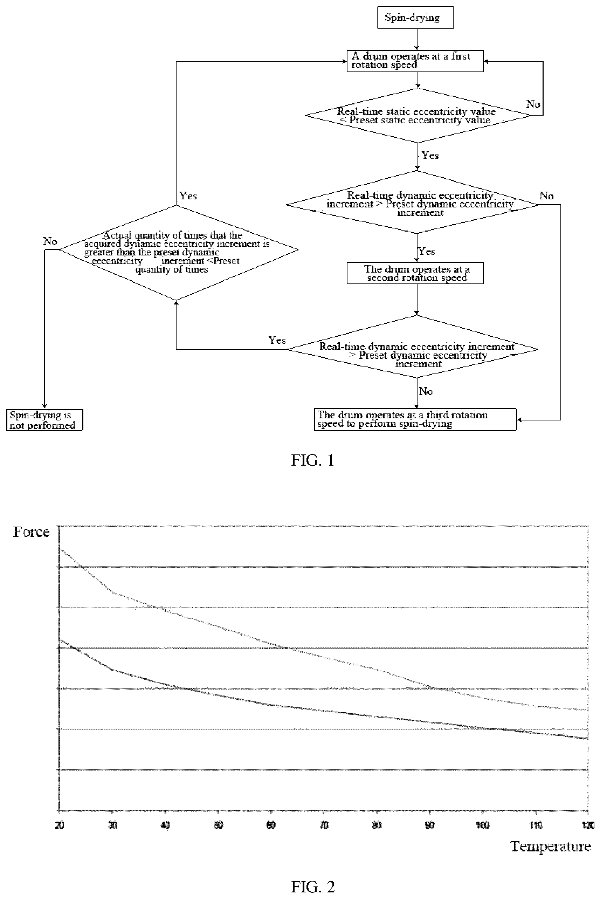

The present invention provides a method for increasing a spin-drying achievement rate of a washing machine, as shown in FIG. 1, including the following steps:
S10: In response to a spin-drying instruction, controlling a drum to operate at a first rotation speed to perform load distribution until an acquired static eccentricity value is less than a preset static eccentricity value.
   In one embodiment, after the drum washing machine receives the spin-drying instruction, the drum is first controlled to operate at the first rotation speed to perform load distribution, so that clothes in the drum can be evenly adhered to a wall of the drum. After the drum operates at the first rotation speed for a period of time, a current static eccentricity value is compared with the preset static eccentricity value. If the static eccentricity value is less than the preset static eccentricity value, it indicates that a current static eccentricity value parameter meets a requirement, and a dynamic eccentricity increment may be determined. If the static eccentricity value is greater than or equal to the preset static eccentricity value, it indicates that the current static eccentricity value parameter does not meet the requirement, and the drum is continuously controlled to operate at the first rotation speed to perform load distribution until the static eccentricity value meets the requirement.
S20: Determining whether an acquired dynamic eccentricity increment is greater than a preset dynamic eccentricity increment.
   In one embodiment, to ensure that when the drum washing machine performs high-speed spin-drying, the drum washing machine does not shift, and an inner drum is not hit, the preset dynamic eccentricity increment may still be set to a conservative value. Therefore, after a drum load is distributed, the dynamic eccentricity increment is compared with the preset dynamic eccentricity increment.
S30: If the dynamic eccentricity increment is greater than the preset dynamic eccentricity increment, controlling the drum to operate at a second rotation speed until the acquired dynamic eccentricity increment is no longer greater than the preset dynamic eccentricity increment.
   In one embodiment, as shown in FIG. 2, if the dynamic eccentricity increment is greater than the preset dynamic eccentricity increment, the drum is controlled to operate at the second rotation speed to preheat a shock absorber. If the dynamic eccentricity increment is greater than the preset dynamic eccentricity increment, it indicates that a current dynamic eccentricity value increment does not meet a requirement, and high-speed spin-drying cannot be performed. Therefore, the drum is controlled to operate at the second rotation speed, so that a temperature of the shock absorber is increased in a short period of time. In this way, a force of the shock absorber tends to be stable, and a dynamic eccentricity value of the drum tends to be a stable value quickly, thereby reducing the dynamic eccentricity increment.
S32: Acquiring a dynamic eccentricity increment after the drum is controlled to operate at the second rotation speed for a preset duration.
   In one embodiment, after the shock absorber is preheated, the dynamic eccentricity increment is quickly reduced to meet a condition of high-speed spin-drying. Whether the acquired dynamic eccentricity increment is greater than the preset dynamic eccentricity increment is re-determined. If the dynamic eccentricity increment is less than or equal to the preset dynamic eccentricity increment, the drum is controlled to operate at a third rotation speed to perform spin-drying. If the dynamic eccentricity increment is still greater than the preset dynamic eccentricity increment after the shock absorber is preheated, return to step S10 again, that is, the drum is controlled to operate at the first rotation speed to perform load distribution. In this way, a situation of a large dynamic eccentricity increment caused by uneven distribution of clothes in the drum due to the fact that load distribution is not in place for the first time is avoided.
S34: Performing different spin-drying strategies according to a result of comparison between a quantity of times that the acquired dynamic eccentricity increment is greater than the preset dynamic eccentricity increment with a preset quantity of times.

In one embodiment, before returning to step S10, the performing different spin-drying strategies based on a result of comparison between a quantity of times that the acquired dynamic eccentricity increment is greater than the preset dynamic eccentricity increment with a preset quantity of times includes:
if the quantity of times that the acquired dynamic eccentricity increment is greater than the preset dynamic eccentricity increment is less than the preset quantity of times, jumping to step S10.

If the quantity of times that the acquired dynamic eccentricity increment is greater than the preset dynamic eccentricity increment is not less than the preset quantity of times, spin-drying is not performed.

In this embodiment, the drum is controlled to operate at the second rotation speed to preheat the shock absorber, thereby reducing the dynamic eccentricity increment. A quantity of times of preheating is set according to different specifications of washing machines. If a quantity of times of operation (namely, the quantity of times that the acquired dynamic eccentricity increment is greater than the preset dynamic eccentricity increment) exceeds a preset quantity of times, it is determined that high-speed spin-drying cannot be performed. In this case, the drum is controlled to directly stop without performing spin-drying.

S40: Controlling the drum to operate at a third rotation speed to perform spin-drying.

In one embodiment, if the dynamic eccentricity increment DP0 is less than or equal to the preset dynamic eccentricity increment DPZ, it indicates that the current dynamic eccentricity value increment meets the requirement, and high-speed spin-drying can be performed. Therefore, the drum is controlled to operate at the third rotation speed.

In this embodiment, the first rotation speed < the second rotation speed < the third rotation speed. The first rotation speed has different values according to different specifications of washing machines. Optionally, the first rotation speed ranges from 60 r/min to 90 r/min. The second rotation speed has different values according to different specifications of washing machines. Optionally, the second rotation speed ranges from 150 r/min to 250 r/min. The third rotation speed has different values according to spin-drying instructions of different degrees received by the washing machine. Optionally, the third rotation speed is 800 r, 1600 r/min, or the like.

### Embodiment 2

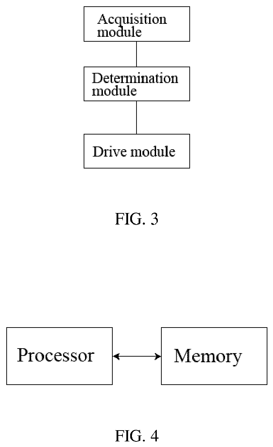

As shown in FIG. 3, based on Embodiment 1, the present invention further provides a device for increasing a spin-drying achievement rate of a washing machine, including: a drive module, an acquisition module, and a determination module.

The drive module is configured to: in response to a spin-drying instruction, control a drum to operate at a first rotation speed to perform load distribution until a static eccentricity value acquired by the acquisition module is less than a preset static eccentricity value.

The determination module is configured to: determine whether an acquired dynamic eccentricity increment is less than or equal to a preset dynamic eccentricity increment.

The drive module is configured to: if the determination module determines that the dynamic eccentricity increment is greater than the preset dynamic eccentricity increment, control the drum to operate at a second rotation speed until the dynamic eccentricity increment acquired by the acquisition module is no longer greater than the preset dynamic eccentricity increment.

The drive module is configured to: if the dynamic eccentricity increment acquired by the acquisition module is no longer greater than the preset dynamic eccentricity increment, control the drum to operate at a third rotation speed to perform spin-drying.

The above device is configured to perform the method embodiment shown in FIG. 1, and the two have similar technical principles, technical problems to be solved, and generated technical effects. It may be clearly understood by a person skilled in the art that, for convenience and concision of description, for a detailed operating process and related descriptions of the device, refer to descriptions of the embodiment of the method for increasing a spin-drying achievement rate of a washing machine, which will not be repeated here.

### Embodiment 3

A person skilled in the art may understand that, in the present invention, all or some of the procedures of the method in the foregoing embodiment may be implemented by instructing related hardware through a computer program. The computer program may be stored in a computer-readable storage medium. When the computer program is executed by a processor, the steps in the method embodiments may be implemented. The computer program includes a computer program code, which may be in a source code form, an object code form, an executable file form, an intermediate form, or the like. The computer-readable storage medium may include any entity or device capable of carrying the computer program code, a medium, a USB flash drive, a mobile hard disk, a magnetic disk, a compact disc, a computer memory, a read-only memory, a random access memory, an electrical carrier signal, a telecommunication signal, a software distribution medium, and the like. It should be noted that content included in the computer-readable storage medium may be appropriately added or deleted based on requirements of legislation and patent practice in a jurisdiction. For example, in some jurisdictions, according to legislation and patent practice, the computer-readable storage medium does not include the electrical carrier signal or the telecommunication signal.

Based on Embodiment 1, the present invention further provides a computer-readable storage medium, including a stored program, where when the program is run, the method for increasing a spin-drying achievement rate of a washing machine described in Embodiment 1 is performed.

Therefore, the present invention further provides a computer-readable storage medium. In an embodiment of the computer-readable storage medium according to the present invention, the computer-readable storage medium may be configured to store a program for performing the method for increasing a spin-drying achievement rate of a washing machine in the foregoing method embodiment. The program may be loaded and run by a processor to implement the foregoing method. For ease of description, only a part related to the embodiment of the present invention is shown. For specific technical details that are not disclosed, refer to the method part in embodiments of the present invention. The computer-readable storage medium may be a storage device including various electronic devices. Optionally, the computer-readable storage medium in the embodiment of the present invention is a non-transitory computer-readable storage medium.

### Embodiment 4

The present invention further provides an electronic device. As shown in FIG. 4, the electronic device may include a memory and a processor. The memory stores a computer program. The computer program is adapted to be loaded and run by the processor to perform the method for increasing a spin-drying achievement rate of a washing machine in the foregoing embodiment.

For ease of description, only a part related to the embodiment of the present invention is shown. For specific technical details that are not disclosed, refer to the method part in embodiments of the present invention. The electronic device may be a control device including various electronic components.

Further, it should be understood that because the modules are merely used to illustrate the functional units of the device of the present invention, and a physical component corresponding to each module may be the processor itself, a part of software in the processor, a part of hardware, or a part of a combination of software and hardware. Therefore, the number of various modules in the figure is merely illustrative.

A person skilled in the art may understand that the modules in the device may be adaptively split or combined. Such splitting or combining of specific modules does not cause the technical solutions to deviate from the principle of the present invention. Therefore, the technical solutions after splitting or combining is performed shall fall within the protection scope of the present invention.

In this case, the technical solutions of the present invention have been described with reference to preferred implementations shown in the accompanying drawings. However, a person skilled in the art may easily understand that the protection scope of the present invention is clearly not limited to these specific implementations. A person skilled in the art may make equivalent modifications or replacements to the related technical features without deviating from the principle of the present invention, and the technical solutions after such modifications or replacements shall fall within the protection scope of the present invention.

The foregoing descriptions are merely preferred implementations of this application. It should be noted that a person of ordinary skill in the art may make several improvements or refinements without departing from the principle of this application, and the improvements or refinements shall fall within the protection scope of this application.

## Claims

1. A method for increasing a spin-drying achievement rate of a washing machine, comprising the following steps:
S10: in response to a spin-drying instruction, controlling a drum to operate at a first rotation speed to perform load distribution until an acquired static eccentricity value is less than a preset static eccentricity value;
S20: determining whether an acquired dynamic eccentricity increment is less than or equal to a preset dynamic eccentricity increment;
S30: if the dynamic eccentricity increment is greater than the preset dynamic eccentricity increment, controlling the drum to operate at a second rotation speed until the acquired dynamic eccentricity increment is no longer greater than the preset dynamic eccentricity increment; and
S40: controlling the drum to operate at a third rotation speed to perform spin-drying, wherein
the first rotation speed < the second rotation speed < the third rotation speed.

2. The method for increasing a spin-drying achievement rate of a washing machine according to claim 1, further comprising:
S32: acquiring a dynamic eccentricity increment after the drum is controlled to operate at the second rotation speed for a preset duration; and
S34: performing different spin-drying strategies according to a result of comparison between a quantity of times that the acquired dynamic eccentricity increment is greater than the preset dynamic eccentricity increment with a preset quantity of times.

3. The method for increasing a spin-drying achievement rate of a washing machine according to claim 2, wherein the performing different spin-drying strategies according to a result of comparison between a quantity of times that the acquired dynamic eccentricity increment is greater than the preset dynamic eccentricity increment with a preset quantity of times comprises:
if the quantity of times that the acquired dynamic eccentricity increment is greater than the preset dynamic eccentricity increment is less than the preset quantity of times, jumping to step S10.

4. The method for increasing a spin-drying achievement rate of a washing machine according to claim 2, wherein if the quantity of times that the acquired dynamic eccentricity increment is greater than the preset dynamic eccentricity increment is not less than the preset quantity of times, spin-drying is not performed.

5. The method for increasing a spin-drying achievement rate of a washing machine according to any one of claims 1 to 4, further comprising: if the dynamic eccentricity increment is not greater than the preset dynamic eccentricity increment, jumping to step S40.

6. The method for increasing a spin-drying achievement rate of a washing machine according to claim 1, wherein the first rotation speed ranges from 60 r/min to 110 r/min.

7. The method for increasing a spin-drying achievement rate of a washing machine according to claim 1, wherein the second rotation speed ranges from 150 r/min to 250 r/min.

8. A device for increasing a spin-drying achievement rate of a washing machine, comprising: a drive module, an acquisition module, and a determination module, wherein
the drive module is configured to: in response to a spin-drying instruction, control a drum to operate at a first rotation speed to perform load distribution until a static eccentricity value acquired by the acquisition module is less than a preset static eccentricity value;
the determination module is configured to: determine whether an acquired dynamic eccentricity increment is less than or equal to a preset dynamic eccentricity increment;
the drive module is configured to: if the determination module determines that the dynamic eccentricity increment is greater than the preset dynamic eccentricity increment, control the drum to operate at a second rotation speed until the dynamic eccentricity increment acquired by the acquisition module is no longer greater than the preset dynamic eccentricity increment; and
the drive module is configured to: if the dynamic eccentricity increment acquired by the acquisition module is no longer greater than the preset dynamic eccentricity increment, control the drum to operate at a third rotation speed to perform spin-drying.

9. A computer-readable storage medium, comprising a program, wherein when the program is run, the method for increasing a spin-drying achievement rate of a washing machine according to any one of claims 1 to 7 is performed.

10. An electronic device, comprising a memory and a processor, wherein the memory stores a computer program, and the processor is configured to perform, through the computer program, the method for increasing a spin-drying achievement rate of a washing machine according to any one of claims 1 to 7.
